# EUROPÄISCHE PATENTSCHRIFT

(11) **EP 2 508 403 B1**
(45) Veröffentlichungstag und Bekanntmachung des Hinweises auf die Patenterteilung: **29.05.2013**
(21) Anmeldenummer: 12002100.1
(22) Anmeldetag: 26.03.2012
(51) Int. Cl.: B60W 30/045, B60W 30/095, B66F 17/00

(54) **Verfahren zur Fahgeschwindigkeitsreduzierung bei einer Kurvenfahrt eines Flurförderzeugs**
Method for reducing speed when an industrial truck is cornering
Procédé de réduction de la vitesse de roulement lors de la négociation d'un virage par un chariot de manutention

(30) Priorität: 08.04.2011 DE 102011016543
(43) Veröffentlichungstag der Anmeldung: 10.10.2012
(73) Patentinhaber: Jungheinrich Aktiengesellschaft, 22047 Hamburg (DE)
(72) Erfinder: Mahler, Arne, 22335 Hamburg (DE); Meyer, Nicki Marc, 23860 Klein Wesenberg (DE); Von Thienen, Nils, 22305 Hamburg (DE); Kramer, Dieter, 24558 Henstedt-Ulzburg (DE)
(74) Vertreter: Hauck Patent- und Rechtsanwälte

(56) Entgegenhaltungen:
- EP-A1- 1 813 569
- US-B2- 7 165 643

## Beschreibung

Die vorliegende Erfindung betrifft ein Verfahren zur Reduzierung der Fahrgeschwindigkeit bei einer Kurvenfahrt eines Flurförderzeugs.

Aus DE 10 2004 046 890 A1 ist ein Verfahren zur Kippvermeidung von hinterradgelenkten Fahrzeugen, insbesondere Flurförderzeugen bekannt, bei dem die Fahrgeschwindigkeit des Flurförderzeugs reduziert wird, wenn ein Schräglaufwinkel oberhalb eines zulässigen Wertes liegt.

Aus DE 199 18 597 C2 ist ein Verfahren zur Reduzierung der Kippgefahr bei Straßenfahrzeugen bekannt. Hierzu wird fortlaufend der Kippkoeffizient für das Fahrzeug berechnet und mit einem zulässigen Grenzwert verglichen. Bei Überschreiten des Grenzwerts wird automatisch ein Lenkeingriff eingeleitet, der dem Kippen entgegenwirkt, wobei mit abnehmender Kippstabilität der Lenkeingriff zunimmt.

Aus DE 101 020 002 A1 ist ein Verfahren zum Koordinieren von Eingriffe in das Fahrverhalten eines Fahrzeugs bekannt, bei dem ein Schräglaufwinkel einer Vorderachse sowie der Reibwert an der Vorderachse ennittelt und mit einem Schräglaufwinkelschwellwert verglichen wird.

Aus EP 1813 563 A1 ist ein Verfahren zur Reduzierung der Fahrgeschwindigkeit gemäß dem Oberbegrift des Anspruchs 1 bekannt.

Der Erfindung liegt die Aufgabe zugrunde, ein Verfahren zur Reduzierung der Fahrgeschwindigkeit bei einer Kurvenfahrt eines Flurförderzeugs bereitzustellen, das einerseits eine Verzögerung der Fahrgeschwindigkeit des Fahrzeugs zur Verfügung stellt und andererseits den Fahrkomfort für eine Bedienperson nicht durch zu starke Eingriffe in das Fahrverhalten reduziert.

Die Aufgabe wird erfindungsgemäß durch ein Verfahren mit den Merkmalen aus Anspruch 1 gelöst. Vorteilhafte Ausgestaltungen bilden den Gegenstand der Unteransprüche.

Das erfindungsgemäße Verfahren dient zur Reduzierung der Fahrgeschwindigkeit bei einer Kurvenfahrt eines Flurförderzeugs. Das Verfahren setzt insbesondere dann ein, wenn die Kurvenfahrt eingeleitet wird. Erfindungsgemäß erfolgt zunächst ein Bereitstellen von vorbestimmten Grenzwerten für einen maximal zulässigen Solllenkwinkel ϕ ₘₐₓ, eine maximal zulässige Fahrgeschwindigkeit νₘₐₓ und eine maximale Änderungsgeschwindigkeit des Solllenkwinkels ϕ̇ₘₐₓ. In einem weiteren Schritt erfolgt ein Erfassen des Sollwerts Für den Lenkwinkel ϕₛₒₗₗ, der beispielsweise von einem Lenkwinkelgeber vorgegeben wird. Ferner wird ein Istwert füz die Fahrgeschwindigkeit vᵢₛₜ und eine Änderungsgeschwindigkeit des Lenkwinkels des Sollwerts ϕ̇ₛₒₗₗ erfasst. Ein Differenzwert für die Fahrgeschwindigkeit wird abhängig von dem Istwert der Fahrgeschwindigkeit bestimmt.

In einem nachfolgenden Schritt wird der Sollwert für die Fahrgeschwindigkeit um den Differenzwert vermindert, wenn zwei der erfassten Größen einen entsprechenden Grenzwert überschreiten. Wird keiner oder nur einer der Grenzwerte überschritten, so wird der Sollwert für die Fahrgeschwindigkeit nicht vermindert und das erfindungsgemäße Verfahren wird weiter mit einem von einem Fahrschalter vorgegebenen Sollwert durchgeführt. Nachfolgend erfolgt eine Veränderung des Sollwerts für die Fahrgeschwindigkeit gemäß einer vorgegebenen Kennlinie über die Zeit, wenn eine Kurvenfahrt eingeleitet wird. Die Kennlinie kann beispielsweise eine durch einen Rampengenerator erzeugte Verminderung des Sollwerts sein. Die Veränderung des Sollwerts erfolgt stets bei eingeleiteter Kurvenfahrt unabhängig davon, ob Grenzwerte überschritten wurden. Das Einleiten der Kurvenfahrt wird beispielsweise durch eine Änderung des Lenkwinkels aus der Geradeausfahrt heraus festgestellt. Das erfindungsgemäße Verfahren erlaubt es, lenkwinkelabhängig die Fahrgeschwindigkeit zu reduzieren, wobei kritische Kurvenparameter bei Einleitung der Kurvenfahrt erkannt und durch ein zusätzliches Vermindern des Sollwerts mit dem Differenzwert für die Fahrgeschwindigkeit berücksichtigt werden. Eine Veränderung des Sollwerts für die Fahrgeschwindigkeit erfolgt im erfindungsgemäßen Verfahren über die Zeit, so dass abgesehen von der auftretenden Verminderung des Sollwerts um den Differenzwert in kritischen Situationen für eine Bedienperson stets ein gleiches oder ähnliches Verhalten des Fahrzeugs bei der Kurvenfahrt vorliegt. Ein weiterer Vorteil des erfindungsgemäßen Verfahrens besteht darin, dass bei Flurförderzeugen, bei denen bereits vorgesehen ist, den Sollwert für die Fahrgeschwindigkeit bei einer Kurvenfahrt über eine vorbestimmte Kennlinie zu reduzieren, der zusätzliche Schritt den Sollwert um den Differenzwert in kritischen Situationen zu vermindern, einfach in bestehende Steuerungen integriert werden kann.

In einer bevorzugten Ausgestaltung ist die Höhe des Differenzwerts proportional zur Istfahrgeschwindigkeit, so dass bei einem schnell fahrenden Flurförderzeug, bei dem kritische Parameter bei Einleitung der Kurvenfahrt vorliegen, der Sollwert für die Fahrgeschwindigkeit einen größeren Sprung macht als bei einem langsamer fahrenden Fahrzeug.

In einer bevorzugten Ausgestaltung des erfindungsgemäßen Verfahrens erfolgt ein Vermindern des Sollwerts für die Fahrgeschwindigkeit, wenn sämtliche Grenzwerte überschritten werden. Die Verwendung von drei Grenzwerten als Kriterium für das Vermindern des Sollwerts der Fahrgeschwindigkeit erlaubt es, kritische Situationen bei der Kurvenfahrt genau zu erfassen und ein unnötiges Vermindern des Sollwerts für die Fahrgeschwindigkeit zu vermeiden.

In einer bevorzugten Weiterbildung des erfindungsgemäßen Verfahrens wird der Sollwert für die Fahrgeschwindigkeit bis zu einem Minimalwert für die Fahrgeschwindigkeit verändert, wobei der Minimalwert bevorzugt abhängig von dem aktuellen Sollwert für den Lenkwinkel ist. Dies bedeutet, dass das Kurvenverhalten des Flurförderzeugs für die Bedienperson vorhersehbar ist und zuverlässig bei einem Sollwert für den Lenkwinkel abgeschätzt werden kann, auf welche Geschwindigkeit die Fahrzeuggeschwindigkeit reduziert wird.

In einer bevorzugten Weiterbildung des erfindungsgemäßen Verfahrens wird, ausgehend von dem Sollwert für die Fahrgeschwindigkeit, sei es der vom Fahrschalter vorgegebene Sollwert oder der verminderte Sollwert, mit einer vorbestimmten Änderungsrate auf den Minimalwert erhöht oder abgesenkt. Die Änderungsrate entspricht der Steilheit eines Rampengenerators, der den Sollwert für die Fahrgeschwindigkeit erhöht oder vermindert. Der besondere Vorteil dieser erfindungsgemäßen Weiterbildung besteht darin, dass eine Veränderung des Sollwerts für die Fahrgeschwindigkeit erfolgt, unabhängig davon, ob er aufgrund von auftretenden kritischen Parametern vermindert wurde oder nicht. Dies erlaubt eine besonders einfache steuertechnische Umsetzung des Verfahrens und sogar die Nachrüstung bei bestehenden Steuerungen.

In einer weiteren bevorzugten Weiterbildung wird, wenn der verminderte Sollwert bei Einleiten der Kurvenfahrt kleiner als der Minimalwert ist, der Sollwert für die Fahrgeschwindigkeit mit einer ersten Änderungsrate erhöht. Die vorstehende Weiterbildung der Erfindung greift dann, wenn aufgrund der Verminderung des Sollwerts bereits eine Absenkung des Sollwerts unter den Minimalwert erfolgt ist. In diesem Fall wird, ausgehend von diesem stark verminderten Sollwert, der Sollwert für die Kurvenfahrt zunächst angehoben. Der Vorteil dieses Verfahrens liegt darin, dass durch die Verminderung des Sollwerts auf einen Wert unterhalb des Minimalwerts eine starke Bremswirkung erzielt wird, die eine kritische Lage in der Kurvenfahrt schnell vermeidet.

In einer weiteren bevorzugten Weiterbildung wird der Sollwert für die Fahrgeschwindigkeit mit einer zweiten Änderungsrate abgesenkt, vorausgesetzt, der verminderte Sollwert ist beim Einleiten der Kurvenfahrt größer als der Minimalwert der Fahrgeschwindigkeit. Durch das Absenken des Sollwerts für die Fahrgeschwindigkeit während der Kurvenfahrt mit der zweiten Änderungsrate, tritt für den Benutzer des Fahrzeugs stets eine wiederkehrende Situation ein, die für die Bedienperson vorherschbar ist.

Im Interesse eines guten Fahrkomforts ist bei dem erfindungsgemäßen Verfahren die erste Änderungsrate größer als die zweite Änderungsrate gewählt. Hierdurch erfolgt, falls der verminderte Wert für die Fahrgeschwindigkeit unterhalb des Minimalwerts der Fahrgeschwindigkeit liegt, ein starkes Bremsen und ein schnelles Zurückkehren auf den Minimalwert für die Fahrgeschwindigkeit, während in Situationen, in denen der verminderte Sollwert für die Fahrgeschwindigkeit über den nicht verminderten Wert für die Fahrgeschwindigkeit bei Einleitung der Kurvenfahrt vorliegt, ein langsameres Abbremsen der Fahrgeschwindigkeit erfolgt.

In einer bevorzugten Ausgestaltung erfolgt ein Erhöhen und/oder Absenken des Sollwerts auf den Minimalwert linear mit einer konstanten Änderungsrate.

In einer bevorzugten Ausgestaltung ist der Minimalwert, auf den die Fahrgeschwindigkeit abgesenkt oder angehoben wird, abhängig von dem aktuellen Sollwert für den Lenkwinkel. Dies bedeutet, dass bei einer Änderung des Sollwerts für den Lenkwinkel sich auch der Minimalwert für die Fahrgeschwindigkeit ändert.

Die Abhängigkeit des Minimalwerts von dem Sollwert für den Lenkwinkel ist dabei derart, dass mit zunchmendem Sollwert für den Lenkwinkel ein kleiner werdender Minimalwert für die Fahrgeschwindigkeit bestimmt wird.

Die vorliegende Erfindung wird nachfolgend anhand eines Ausfdhrungsbeispiels näher erläutert. Es zeigt:
- Fig. 1: ein Blockschaltbild zur Sollwertverarbeitung bei der erfindungsgemäßen lenkwinkelabhängigen Fahrgeschwindigkeitsreduzierung,
- Fig. 2: den Verlauf des Sollwerts für die Fahrgeschwindigkeit bei einem Sollwertsprung ohne Unterschreiten der Minimalgeschwindigkeit und
- Fig. 3: den zeitlichen Verlauf des Sollwerts für die Fahrgeschwindigkeit bei einem Sollwertsprung auf einen Wert unterhalb der Minimalgeschwindigkeit.

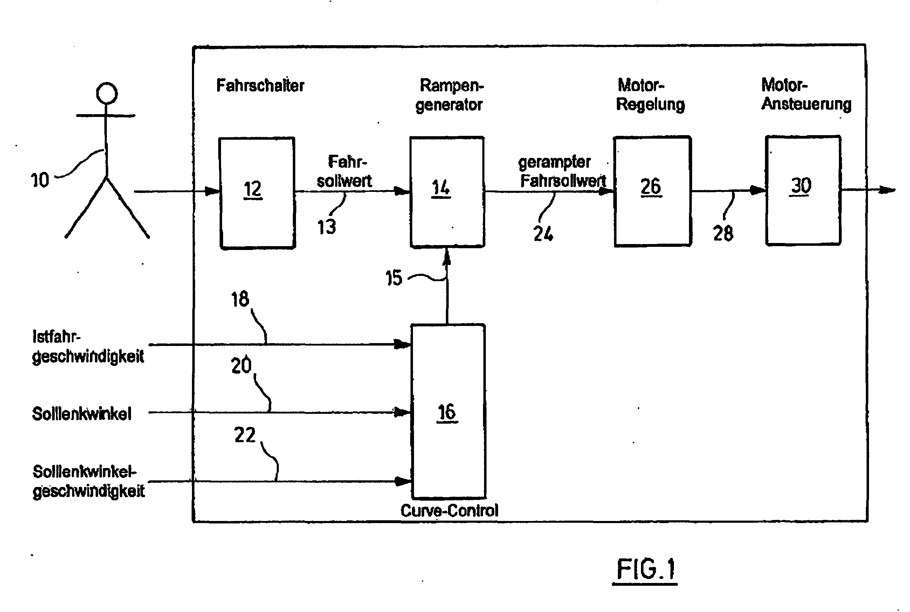

Fig. 1 zeigt ein schematisches Blockschaltbild, bei dem eine Bedienperson 10 einen Fahrschalter 12 eines Flurförderzeugs betätigt. Das Stellsignal des Fahrschalters wird in einen Fahrsollwert 13 umgerechnet (nicht dargestellt), der an einem Rampengenerator 14 anliegt.

An dem Rampengenerator 14 liegt ferner ein Wert 15 Δv zur Verminderung des Fahrsollwerts an. Der Wert 15 Δv zur Verminderung des Fahrsollwerts wird von einer Kurvensteuerung 16 berechnet. An der Kurvensteuerung 16 liegen die Istfahrgeschwindigkeit 18, der Solllenkwinkel 20 und die Solllenkwinkelgeschwindigkeit 22. In der Kurvensteuerung werden die anliegenden Werte für die Istfahrgeschwindigkeit 18, den Solllenkwinkel 20 und die Solllenkwinkelgeschwindigkeit 22 mit vorbestimmten Grenzwerten (nicht dargestellt) verglichen. Werden mindestens zwei der Grenzwerte durch die anliegenden Werte überschritten, wird ein von null verschiedener Differenzwert Δv generiert, der proportional zur Istfahrgeschwindigkeit ist. Ist keiner der Grenzwerte überschritten, so wird Δu gleich null gesetzt. Optional ist auch möglich, statt Δv gleich null zu ersetzen, einen Differenzwert so zu wählen, der proportional zum Lenkwinkel ist.

In dem Rampengenerator 14 wird der anliegende Fahrsollwert 13 um den anliegenden Differenzwert Δv vermindert. Hierdurch entsteht ein verminderter Fahrsollwert, der durch den Rampengenerator 14 mit einer vorbestimmten Änderungsrate auf einen Minimalwert für die Fahrgeschwindigkeit herabgesetzt oder erhöht wird. Hierzu wird bevorzugt ein linearer Verlauf des Fahrsollwerts in dem Rampengenerator erzeugt. Der gerampte Fahrsollwert 24 liegt an einer Motor-Regelung 26 an. Die Motor-Regelung 26 ermittelt die entsprechenden Steuersignale 28 für eine Motoransteuerung 30.

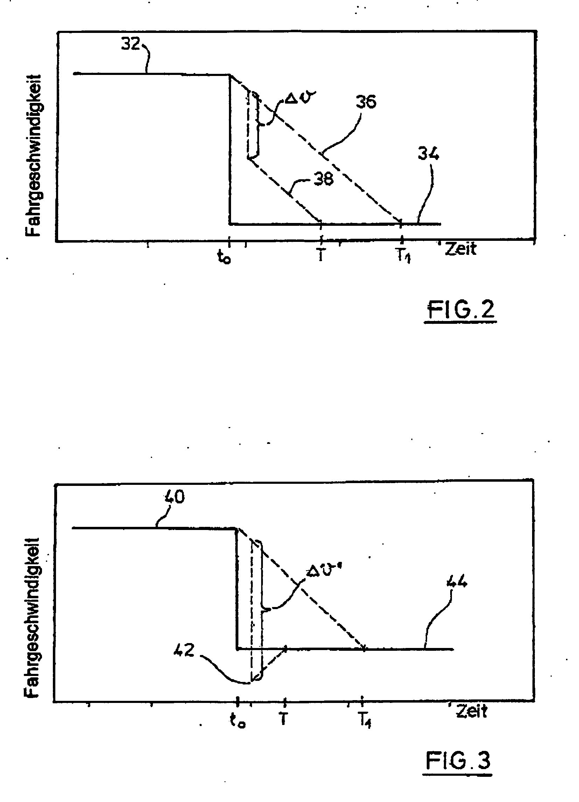

Fig. 2 zeigt den zeitlichen Verlauf des Sollwerts für die Fahrgeschwindigkeit über der Zeit. Es sei angenommen, dass zum Zeitpunkt t₀ der Lenkvorgang bei einer Istfahrgeschwindigkeit 32 eingeleitet wird. Aufgrund der anliegenden Werte für den Solllenkwinkel, die Solllenkwinkelgeschwindigkeit und die Istfahrgeschwindigkeit erkennt die Steuerung 16, ob eine sichere Kurvenfahrt möglich ist. Nachfolgend wird von der Kurvensteuerung 16 ein Wert Δv zur Verminderung des Sollwerts der Fahrgeschwindigkeit erzeugt. Wie in Fig. 2 dargestellt, wird der erzeugte Wert Δv von dem zu diesem Zeitpunkt vorliegenden Fahrsollwert subtrahiert. Gleichzeitig reduziert der Rampengenerator 14 den Sollwert für die Fahrgeschwindigkeit gemäß der eingezeichneten Kurve 36 auf einen Minimalwert 34 für die Kurvenfahrt. Durch den Sollwertsprung Δv wird der gesamte Fahrsollwert 36 reduziert, so dass bereits zum Zeitpunkt T die Minimalgeschwindigkeit 34 erreicht ist. Würde dagegen ohne den Sprung Δv in der Sollwertreduzierung gearbeitet, würde durch das reguläre Rampen der Sollwerte erst in Zeitpunkt T₁ die Minimalgeschwindigkeit 34 für die Kurvenfahrt erreicht werden.

Fig. 3 zeigt den Verlauf des Sollwerts für die Fahrgeschwindigkeit 40 über der Zeit. Es sei wieder angenommen, dass zum Zeitpunkt t₀ der Lenkvorgang eingeleitet wird. Die Kurvensteuerung 16 ermittelt in dem vorliegenden Fall, bei dem ein größerer Wert für die Istfahrgeschwindigkeit angenommen wurde, einen Sprung Δv' für den Fahrsollwert, wobei der um Δv' verminderte Sollwert für die Fahrgeschwindigkeit 42 kleiner als der Minimalwert 44 für die Fahrgeschwindigkeit ist. Der Rampengenerator 14 erhöht nachfolgend den Sollwert für die Fahrgeschwindigkeit bis zum Zeitpunkt T der Minimalwert 44 erreicht wurde. Auch in diesem Beispiel wird deutlich, dass das Fahrzeug deutlich früher die für die Kurvenfahrt vorgesehene Minimalgeschwindigkeit 44 erreicht. Zur besseren Übersicht wurde in Fig. 3 angenommen, dass der Sollwert für den Lenkwinkel sich während des betrachteten Zeitintervalls nicht ändert. Bei einer Änderung des Sollwerts würde sich der Minimalwert 44 nach oben bei einer Verkleinerung oder nach unten bei einer Vergrößerung des Sollwerts für den Lenkwinkel verschieben.

Zusammenfassend kann für die vorliegende Erfindung festgehalten werden, dass über die Eingangsgrößen Istfahrgeschwindigkeit 18, Solllenkwinkel 20 und Änderungsgeschwindigkeit 22 des Solllenkwinkels von der Kurvensteuerung 16 ermittelt wird, ob die Abbremsung bei der Kurveneinfahrt normal, also über das Herunterrampen 36 des Rampengenerators 14 erfolgen soll oder ob eine besonders schnelle Einleitung der Abbremsung durch einen Sollwertsprung Δv' erforderlich ist.

Ab einer festgelegten maximalen Fahrgeschwindigkeit für schnelles Einlenken, ausgehend von einem Solllenkwinkel außerhalb eines Toleranzbereichs um die Nulllage, kommt es erfindungsgemäß zu einer Einleitung einer schnellen Abbremsung durch einen Sollwertsprung. Die von der Kurvensteuerung ermittelte Höhe für den Sollwertsprung ist dabei proportional zur Istfahrgeschwindigkeit. Dies bedeutet, dass bei einer großen Istfahrgeschwindigkeit eine stärkere Verminderung des Sollwerts für die Fahrgeschwindigkeit vorgesehen ist, als bei einer geringeren Istfahrgeschwindigkeit. Vor und nach der sprunghaften Verminderung des Fahrsollwertes nähert sich dieser durch Anwendung des Rampengenerators dem Minimalwert. Der gerampte Sollwertverlauf der Sollwertreduzierung bei Kurvenfahrten weist also in kritischen Fällen den zusätzlich durchgeführten Sprung auf.

## Patentansprüche

1. Verfahren zur Fahrgeschwindigkeitsreduzierung bei einer Kurvenfahrt eines Flurförderzeugs, mit folgenden Verfahrensschritten:
- Bereitstellen von vorbestimmten Grenzwerten für einen maximal zulässigen Solllenkwinkel, eine maximal zulässige Fahrgeschwindigkeit und eine maximal zulässige Änderungsgeschwindigkeit des Solllenkwinkels,
- Erfassen eines Sollwerts für den Lenkwinkel, eines Istwerts für die Fahrgeschwindigkeit und einer Änderungsgeschwindigkeit des Lenkwinkels,
gekennziechnet durch die folgenden Verfahrensschritten:
- Bestimmen eines Differenzwerts für die Fahrgeschwindigkeit abhängig von dem Istwert der Fahrgeschwindigkeit,
- Vermindern eines Sollwerts für die Fahrgeschwindigkeit um den Differenzwert, wenn zwei der erfassten Größen einen entsprechenden Grenzwert überschreitet und
- Verändern des Sollwerts für die Fahrgeschwindigkeit gemäß einer vorgegebenen Kennlinie über die Zeit, wenn eine Kurvenfahrt eingeleitet wird.

2. Verfahren nach Anspruch 1, **dadurch gekennzeichnet, dass** der Differenzwert proportional zu dem Wert der Istfahrgeschwindigkeit ist.

3. Verfahren nach Anspruch 1 oder 2, **dadurch gekennzeichnet, dass** der Sollwert für die Fahrgeschwindigkeit vermindert wird, wenn sämtliche vorbestimmte Grenzwerte überschritten werden.

4. Verfahren nach einem der Ansprüche 1 bis 3, **dadurch gekennzeichnet, dass** der Sollwert für die Fahrgeschwindigkeit bis zu einem Minimalwert für die Fahrgeschwindigkeit verändert wird.

5. Verfahren nach Anspruch 4, **dadurch gekennzeichnet, dass** der Sollwert für die Fahrgeschwindigkeit mit einer vorbestimmten Änderungsrate auf den Minimalwert erhöht oder abgesenkt wird.

6. Verfahren nach Anspruch 5, **dadurch gekennzeichnet, dass**, wenn der verminderte Sollwert bei Einleiten der Kurvenfahrt kleiner als der Minimalwert ist, der Sollwert für die Fahrgeschwindigkeit mit einer ersten Änderungsrate auf den Minimalwert erhöht wird.

7. Verfahren nach Anspruch 5 oder 6, **dadurch gekennzeichnet, dass**, wenn der verminderte Sollwert bei Einleiten der Kurvenfahrt größer als der Minimalwert ist, der Sollwert für die Fahrgeschwindigkeit mit einer zweiten Änderungsrate auf den Minimalwert abgesenkt wird.

8. Verfahren nach Anspruch 6 und 7, **dadurch gekennzeichnet, dass** die erste Änderungsrate größer als die zweite Änderungsrate gewählt ist.

9. Verfahren nach einem der Ansprüche 4 bis 8, **dadurch gekennzeichnet, dass** ein Erhöhen und/oder Absenken des Sollwerts auf den Minimalwert für die Fahrgeschwindigkeit mit einer konstanten Änderungsrate erfolgt.

10. Verfahren nach einem der Ansprüche 4 bis 9, **dadurch gekennzeichnet, dass** der Minimalwert abhängig von dem aktuellen Sollwert für den Lenkwinkel bestimmt wird.

11. Verfahren nach Anspruch 10, **dadurch gekennzeichnet, dass** bei mit zunehmendem Sollwert für den Lenkwinkel ein kleiner werdender Minimalwert für die Fahrgeschwindigkeit bestimmt wird.

## Claims

1. A method for reducing speed when an industrial truck is cornering, with the following procedural steps:
- provision of predetermined threshold values for a maximum permissible target steering angle, a maximum permissible driving speed and a maximum permissible change speed of the target steering angle,
- determination of a target value for the steering angle, an actual value for the driving speed and a change speed of the steering angle,
**characterized by** the following procedural steps:
- determination of a differential value for the driving speed depending of the actual value of the driving speed,
- reduction of a target value for the driving speed by the differential value when two of the determined variables exceed a corresponding threshold value and
- changing of the target value for the driving speed according to a specified characteristic line over the time when cornering is initiated.

2. The method according to claim 1, **characterized in that** the differential value is proportional to the value of the actual driving speed.

3. The method according to claim 1 or 2, **characterized in that** the target value for the driving speed is reduced when all predetermined threshold values are exceeded.

4. The method according to one of claims 1 through 3, **characterized in that** the target value for the driving speed is changed up to a minimum value for the driving speed.

5. The method according to claim 4, **characterized in that** the target value for the driving speed with a predetermined change rate is increased or decreased to the minimum value.

6. The method according to claim 5, **characterized in that**, if the reduced target value is less than the minimum value when cornering begins, the target value for the driving speed with a first change rate is increased to the minimum value.

7. The method according to claim 5 or 6, **characterized in that**, if the reduced target value is greater than the minimum value when cornering begins, the target value for the driving speed with a second change rate is reduced to the minimum value.

8. The method according to claim 6 or 7, **characterized in that** the first change rate is selected to be greater than the second change rate.

9. The method according to one of claims 4 through 8, **characterized in that** a raising and/or lowering of the target value to the minimum value for the driving speed takes place with a constant change rate.

10. The method according to one of claims 4 through 9, **characterized in that** the minimum value is determined depending on the current target value for the steering angle.

11. The method according to claim 10, **characterized in that** a decreasing minimum value for the driving speed is determined in the case of an increasing target value for the steering angle.

## Revendications

1. Procédé de réduction de la vitesse de conduite lors de la négociation d'un virage par un chariot de manutention, comprenant les étapes de procédé suivantes :
- fourniture de valeurs limites prédéfinies pour un angle de braquage de consigne admissible au maximum, une vitesse de conduite admissible au maximum et une vitesse de variation admissible au maximum de l'angle de braquage de consigne,
- détection d'une valeur de consigne pour l'angle de braquage, d'une valeur effective pour la vitesse de conduite et d'une vitesse de variation de l'angle de braquage,
**caractérisé par** les étapes de procédé suivantes :
- définition d'une valeur différentielle pour la vitesse de conduite en fonction de la valeur effective de la vitesse de conduite,
- réduction, correspondant à la valeur différentielle, d'une valeur de consigne pour la vitesse de conduite quand deux des grandeurs détectées dépassent une valeur limite correspondante, et
- modification de la valeur de consigne pour la vitesse de conduite selon une courbe caractéristique en fonction du temps qui est prescrite, quand un virage est entamé.

2. Procédé selon la revendication 1, **caractérisé en ce que** la valeur différentielle est proportionnelle à la valeur de la vitesse de conduite effective.

3. Procédé selon la revendication 1 ou 2, **caractérisé en ce que** la valeur de consigne pour la vitesse de conduite est réduite quand toutes les valeurs limites prédéfinies sont dépassées.

4. Procédé selon une des revendications 1 à 3, **caractérisé en ce que** la valeur de consigne pour la vitesse de conduite est modifiée jusqu'à une valeur minimale pour la vitesse de conduite.

5. Procédé selon la revendication 4, **caractérisé en ce que** la valeur de consigne pour la vitesse de conduite est augmentée ou réduite à la valeur minimale avec un rythme de modification prédéfini.

6. Procédé selon la revendication 5, **caractérisé en ce que**, quand la valeur de consigne réduite au début du virage est plus faible que la valeur minimale, la valeur de consigne pour la vitesse de conduite est augmentée à la valeur minimale avec un premier rythme de modification.

7. Procédé selon la revendication 5 ou 6, **caractérisé en ce que**, quand la valeur de consigne réduite au début du virage est supérieure à la valeur minimale, la valeur de consigne pour la vitesse de conduite est réduite à la valeur minimale avec un deuxième rythme de modification.

8. Procédé selon la revendication 6 ou 7, **caractérisé en ce que** le premier rythme de modification est plus rapide que le deuxième rythme de modification.

9. Procédé selon une des revendications 4 à 8, **caractérisé en ce qu'**une augmentation et/ou réduction de la valeur de consigne à la valeur minimale pour la vitesse de conduite s'effectue à un rythme de modification constant.

10. Procédé selon une des revendications 4 à 9, **caractérisé en ce que** la valeur minimale est définie en fonction de la valeur de consigne actuelle pour l'angle de braquage.

11. Procédé selon la revendication 10, **caractérisé en ce que**, pour une valeur de consigne croissante pour l'angle de braquage, une valeur minimale décroissante est définie pour la vitesse de conduite.
